# EUROPEAN PATENT SPECIFICATION

(11) **EP 4 269 843 B1**
(45) Date of publication and mention of the grant of the patent: **16.04.2025**
(21) Application number: 23169477.9
(22) Date of filing: 24.04.2023
(51) Int. Cl.: F16K 1/226, F16K 27/02, A23D 7/04, B01F 27/906, B01F 35/00, A23D 7/005, A23D 7/02, A23P 30/00, B01F 23/53, B01F 27/84, B01F 35/71, B01F 35/92

(54) **A VALVE, A MIXING UNIT AND A METHOD FOR MIXING A LIQUID FOOD PRODUCT WITH A POWDER FOOD PRODUCT**
VENTIL, MISCHEINHEIT UND VERFAHREN ZUM MISCHEN EINES FLÜSSIGEN NAHRUNGSMITTELS MIT EINEM PULVERFÖRMIGEN NAHRUNGSMITTEL
SOUPAPE, UNITÉ DE MÉLANGE ET PROCÉDÉ POUR MÉLANGER UN PRODUIT ALIMENTAIRE LIQUIDE AVEC UN PRODUIT ALIMENTAIRE EN POUDRE

(30) Priority: 26.04.2022 EP 22169914
(43) Date of publication of application: 01.11.2023
(73) Proprietor: Tetra Laval Holdings & Finance S.A., 1009 Pully (CH)
(72) Inventor: Larsen, Frederik, 8270 Højbjerg (DK); Permn, Thomas, 8270 Højbjerg (DK); Mosgaard, Lars, 8270 Højbjerg (DK); Mortensen, Hans Henrik, 8270 Højbjerg (DK)
(74) Representative: Tetra Pak - Patent Attorneys SE

(56) References cited:
- EP-A1- 3 400 807
- US-A- 2 816 729
- US-A- 3 779 511
- US-A- 4 846 213

## Description

### Technical Field

The invention generally relates to a valve for controlling a product flow. More particularly, it is related to a valve comprising a valve body, a rotatable stem and a disk. The invention also relates to a mixing unit for mixing a liquid food product with a powder food product. The invention also relates to a method for mixing a liquid food product with a powder food product.

### Background Art

It is commonly known to use different types of valves for controlling food product intake and/or outtake of containers or tanks, e.g., mixers or filling machines, in the food processing industry. The valves are configured to control a food product flow to and/or from the containers or tanks and thereby also controlling the intake and/or outtake. Equipment used in the food processing industry need to be designed so that it can be efficiently cleaned.

Even though food processing equipment and especially valves have been used in the food processing industry for decades, there is room for improvement for obtaining better cleaning. A further challenge is the durability of the valve, including the durability of the gaskets of the vales which are exposed to wear and tear.

For these reasons, there is a demand for a valve that fulfills the requirements related to the food processing industry, e.g., hygienic design as well as food safety. There is also a demand for a valve with improved durability and cleanability such that the valve life is increased compared to conventional valves.

Examples of valves and processing equipment are described in patent documents US 2816729 A, US3779511 A, EP 3400807 A1 and US 4846213 A.

### Summary

It is an object to at least partly overcome one or more of the above-identified limitations of the prior art. In particular, it is an object to provide a valve for efficiently controlling a product flow which while still assuring it is easy to clean.

According to embodiments of the valve, other objects may be to provide a valve with improved durability and thereby increased cost-efficiency, a valve which facilitates improved flow capacity and/or a valve which is configured to be easily retrofitted to existing food processing equipment.

According to a first aspect, it is provided a valve for controlling a product flow, the valve comprising a valve body having a product inlet, a product outlet, a product flow channel formed between the product inlet and the product outlet, and a valve seat arranged in the product flow channel; a rotatable stem extending through a wall of the valve body and into the product flow channel with an end portion of the stem disposed within the product flow channel; and a disk arranged at the end portion of the stem at an angle greater than zero relative to an elongated extension of the stem, the disk being movable from a closed position where it abuts the valve seat for sealing the valve closure area, to an open position by rotating the stem approximately 180°, wherein the valve body comprises a stem seal groove having a stem seal that surrounds the stem for providing sealing between the valve body and the stem, and a void space surrounding the stem and extending from the stem seal to the product flow channel, such that the stem seal is fluidly connected to the product flow channel via the void space. The void space has, in a radial direction of the stem, an extension that has a length that is at least 20% of a thickness of the stem, where the thickness of the stem is measured across the stem in the radial direction. The extension is measured on a side of the stem that is opposite the product flow channel.

The valve is preferably configured to control a product being a powder food product. However, it should be noted that the valve may also control a product being a liquid food product. The valve is for controlling the product flow, typically for controlling product intake and/or outtake of containers or tanks in the food processing industry.

The void space should be understood as a geometrical shape that defines its surrounding, i.e. it is a technical design parameter that gives the valve certain technical characteristics. The void space is therefore created to let its geometrical shape define the shape of the parts of the valve that surround the void space.

In this context, the term controlling should be interpreted as the valve is configured to open the product flow channel, by moving the disk to the open position, such that the product may flow through the valve, and to close the product flow channel, by moving the disk to the closed position. In addition, the valve is configured to move the disk between the open and closed positions such that the disk may be arranged in positions being between the open and closed positions, thereby adjusting the flow path of the product through the valve. Thus, by being able to control the valve, it is possible to control a cross section which in turn provides the ability to control the flow rate given the same differential pressure. Put differently, the valve is configured to control the flow between two positions. The valve is advantageous in that it is possible to move the disk from the closed position to the open position in an easy and efficient way by rotating the stem approximately 180°. Herein, the term "approximately 180°" should be interpreted as the stem should be rotated 160-200°, preferably 170-190°, more preferably 175-185°, even more preferably 179-181°. When the disk is in the closed position, it abuts the seal, in other words being transverse to a principal product flow at a location of the disk. When the disk is in the open position, it is arranged along the principal product flow at a location of the disk. Having the present arrangement of the disk, when in the open position, is advantageous in that it allows for a reduced pressure drop of the product flow, when flowing through the valve, compared to conventional valves, such as butterfly valves and ball valves.

At least a portion of the stem which is present in the product flow channel may be flat-shaped. This provides for an increased flow capacity due to a larger open pipe area compared to stems being rounded stems. The larger open area is formed by having a cross-section of the stem, along the principal product flow, which is minimized due to the stem being flat-shaped, when the disk is in the open position, compared to rounded stems.

The valve is further advantageous in that it allows for an improved cleanability compared to conventional valves which is an important requirement within the food processing industry. This is achieved by the disclosed void space which is surrounding the stem of the valve. By having the void space, it is possible to flush cleaning fluid in the void space such that the cleaning fluid may be in direct contact with the stem seal to thereby achieve improved cleanability. In addition, this also provides for that an improved hygienic design is achieved.

The void space facilitates clean-in-place (CIP) technology to be used in an easy and efficient way when cleaning the valve, wherein the CIP technology is able to provide a complete cleaning processes.

The valve is yet further advantageous in that the stem is introduced through the wall of the valve body which thereby prevents penetrating sealing elements that may be comprised in the valve in order to provide for a tight sealing of the valve, as is the case in a conventional butterfly valve. By preventing penetration of sealing elements of the valve, the sealing elements are exposed to a reduced amount of wear and tear compared to a solution in which sealing elements are penetrated. Thereby, a durable valve is achieved having an increased lifetime.

The valve is yet further advantageous in that it is possible to retrofit the valve to existing food processing equipment. Thus, it is possible to replace existing valves of food processing equipment with the disclosed valve without the need of replacing the equipment itself.

The void space may have an extension of at least 3 mm in a radial direction of the stem. This is advantageous as it enables for the cleaning fluid to be in direct contact with the stem seal in an efficient way such that a complete cleaning process is possible. Preferably, the extension may be at least 7.5 mm in the radial direction of the stem.

The void space may have a shape of a hollow body with a truncated section at a first end thereof and a base section at a second opposite end thereof, where a first portion of the base section extends into the wall of the valve body, and wherein a second portion of the base section is adjacent the product flow channel.

The hollow body with the truncated section may also be defined as that the hollow body of the void space having had a portion cut off opposite the base section. This is advantageous in that it allows for the void space to be designed in a desired way depending on the design of the valve body and the introduction of the stem through the wall of the valve body.

The second portion of the base section is opposite to the first portion of the base section and wherein the second portion may be in direct contact with the product flow channel. This is advantageous in that it allows for improved cleanability.

A peripheral part of the stem seal may face the base section of the void space, to thereby define a ring-shaped area partially defining the void space.

It should be understood that the peripheral part of the stem seal is the peripheral part seen in an axial direction. It should be noted that, when the peripheral part of the stem seal is facing the base section of the void space, other shaped-areas partially defining the void space may be defined as well. The shape of the shaped-area may depend on the design of the stem seal. This is advantageous in that it allows for a stable seal to be formed, thereby avoiding, or at least reducing, the risk of that a leak past the stem seal occurs. This is further advantageous in that, as said above, it is possible to provide for an efficient cleaning process, thereby ensuring that a hygienic design of the valve is achieved.

The void space may have the shape of a truncated, hollow cylinder, where the rotatable stem extends through the void space.

It should be understood that the truncated, hollow cylinder and the hollow section are geometrical shapes and that the void space being formed by the hollow cylinder and that the stem extends through the hollow cylinder. The hollow section defines where the stem is arranged though the hollow cylinder. Preferably, the hollow section of the hollow cylinder is centrally arranged such that void space has a uniform extension in the radial direction, seen from the stem to the valve body. Thus, the stem is preferably introduced through a central portion of the void space.

This is advantageous as it allows for an efficient and uniform CIP in order to remove contamination along the complete stem seal and stem.

The valve body may comprise a removable stem holder radially surrounding a portion of the stem and being configured to hold the stem in relation to the valve body, wherein the stem seal groove is located between the stem holder and the valve body.

This is advantageous in that the stem seal is able to provide for a strong and stable seal between the stem holder and the valve body such that a risk of a leakage to occur past the stem seal is avoided or at least reduced.

The stem holder is advantageous in that it allows for the stem to be efficiently kept in place in relation to the valve body.

The stem holder may comprise a leakage detecting hole that extends through the stem holder, in a radial direction of the stem, for providing detection of leakage past the stem seal.

This is advantageous in that it allows for possible leakage to be detected as early as possible thereby also minimizing potential damage as much as possible. Thus, this provides for an easy and efficient leakage detection of the valve.

The valve seat may comprise a main seal groove in which a main sealing element is arranged. This is advantageous as it allows for a strong and stable seal between the valve seat and the disk, when the disk is in the closed position, such that a risk of a leakage to occur past the main sealing element is avoided or at least reduced.

The sealing element may be made of an elastic and durable material. The sealing element may be made of polyurethane. The sealing element may have a shape which provides for an easy movement of the disk into the closed position. This is advantageous in that a durable seal is provided and thereby also an increased lifetime of the seal.

The valve body may comprise two opposite leakage detection passages that extend from the main seal groove, to an outer surface of the valve body for providing detection of leakage past the main sealing element. This is advantageous in that it allows for possible leakage to be detected as early as possible thereby also minimizing potential damage as much as possible. Thus, this provides for an easy and efficient leakage detection of the valve. The two opposite leakage detection passages may be axially aligned with a center of the product flow channel.

The valve body may comprise a first part, a second part and a third part that are connected to each other by attachment devices and with the second part arranged between the first part and the third part, the main seal groove being formed between the first part, the second part and the third part.

By having the main seal groove formed between the three parts facilitates that a strong and efficient seal is provided between the different parts as well as between the valve body and the disk, when the disk is in the closed position.

The attachment devices may be formed by a clamp and a bolt. The attachment devices may be any of these or any other suitable devices for connecting two pipe components to each other. The third part of the valve may form a part of a food processing equipment, for example by being welded to the food processing equipment. This makes the valve suitable for retrofitting to existing food processing equipment, in particular for equipment that already has the third part installed. I this case the third part could have been a part of a conventional butterfly valve that was previously used for the equipment.

When the disk is in the open position, the disk may, as seen along the product flow channel, extend past the product outlet.

The leakage detection passages may be formed in the third part. This facilitates stable and efficient leakage detection, where it is possible to detect if a leakage has occurred past the main sealing element of the valve body.

The main sealing element may have an extension seen along the product flow channel which is at least three times a thickness of the disc. This is advantageous in that it enables for a strong and stable seal to be provided when the disk is in the closed position. This is also advantageous in that more material to wear from is provided compared to conventional valve seals. Thereby, an increased lifetime of the seal is achieved.

According to a second aspect, it is provided a mixing unit for mixing a liquid food product with a powder food product. The mixing unit comprising a tank comprising a liquid inlet configured to receive the liquid food product to the tank and an powder inlet configured to receive the powder food product to the tank, a vacuum source connected to the tank and configured to apply a vacuum to the tank, a valve connected to the powder inlet and configured to control a vacuum induced flow of the powder food product into the tank via the powder inlet, and an agitator arranged inside the tank and configured to agitate the liquid food product and the powder food product, wherein the valve is a valve according to the first aspect.

This is advantageous in that it allows introducing the powder food product into the mixing unit in an easy and efficient way. It is also possible to control the product flow of the powder food product in an efficient way.

According to a third aspect, it is provided a method for mixing a liquid food product with a powder food product. The method comprising feeding the liquid food product to the tank of a mixing unit, the liquid food product having a liquid surface inside the tank; applying a vacuum to the tank by using a vacuum source; feeding the powder food product to the tank of the mixing unit via a disc valve of the mixing unit, when the liquid surface is above the powder inlet such that the powder food product is fed to the tank below the liquid surface; and agitating the liquid food product with the powder food product by using the agitator, wherein the mixing unit is a mixing unit according to the second aspect.

Effects and features of the second and third aspects are largely analogue to those described above in connection with the first aspect.

Still other objectives, features, aspects and advantages will appear from the following detailed description as well as from the drawings.

### Brief Description of the Drawings

Embodiments will now be described, by way of example, with reference to the accompanying schematic drawings, in which
Fig. 1 is a schematic view of a mixing unit.
Fig. 2 is an exploded view of a valve according to the present disclosure.
Fig. 3a is an assembled view of the valve when the disk of the valve is in a closed position (P1).
Fig. 3b is an assembled view of the valve when the disk of the valve is in an open position (P2).
Fig. 4 illustrates a rotatable stem and a stem seal groove of the valve in further detail.
Fig. 5 illustrates a valve seat and of the valve in further detail.
Fig. 6 is a detailed view of a void space of the valve.
Fig. 7 is a flowchart illustrating steps of a method for mixing a liquid food product with a powder food product.

### Detailed description

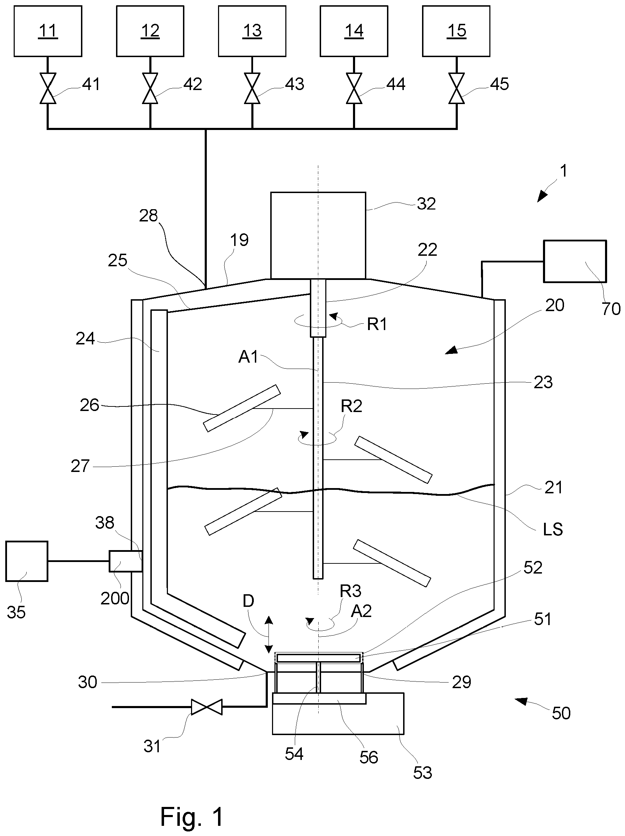

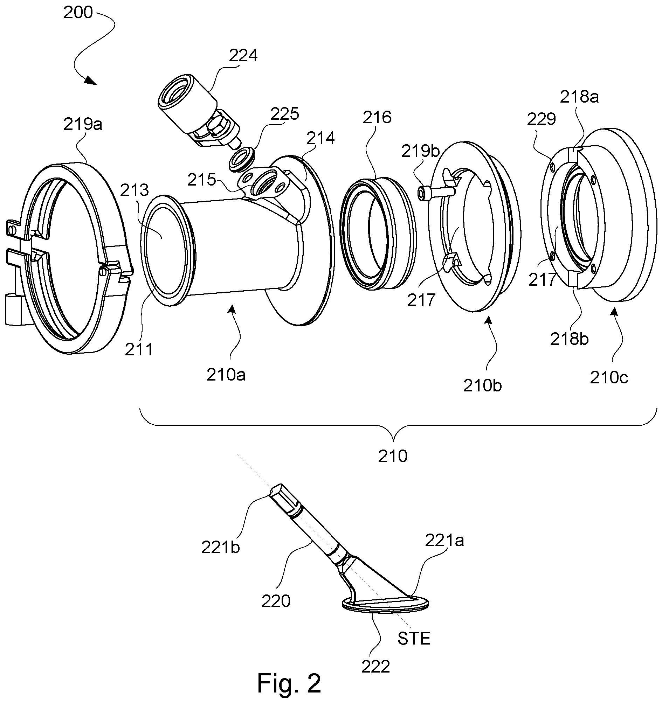

With reference to Fig. 1 a mixing unit 1 is illustrated. The mixing unit 1 comprises a tank 19 that has a liquid inlet 28 for receiving various liquid food products. A number of sources 11-15 that hold the liquid food products are connected to the liquid inlet 28 via valves 41-45 that control the supply of the liquid food products through the liquid inlet 28 and into the tank 19. It should be noted that the mixing unit 1 may be configured to receive less than five liquid food products or more than five liquid food products via the liquid inlet 28. The tank 19 has a powder inlet 38 having a valve 200 connected thereto for receiving a powder food product. The valve 200 is arranged for controlling the flow of the powder food product through the powder inlet 38 and is further discussed in connection with figures 2-7. A powder source 35 that holds the powder food product is connected to the inlet 38. The mixing unit 1 is configured to mix the liquid food products with the powder food product to form a food product.

The mixing unit 1 has at its bottom 29 an outlet 30 through which mixed food product may leave the tank 19, for example by opening an outlet valve 31. To facilitate introducing liquid and/or powder food products into the mixing unit 1, the mixing unit 1 may comprise a pressure arrangement that inside the tank 19 creates a pressure that is lower than a pressure of the atmosphere surrounding the tank 19. To make mixed food products, or typically a finished food product, efficiently leave the mixing unit 1, the pressure arrangement may inside the tank 19 create a pressure that is higher than a pressure of the atmosphere surrounding the tank 19. Additionally or alternatively, one or more pumps may be arranged for feeding the food product into the tank 19 respectively for drawing out a content of the tank 19, such as a finished mayonnaise product.

The pressure arrangement may be a vacuum source 70 as illustrated in figure 1. The vacuum source 70 is connected to the tank 19 and is configured to apply a vacuum to the tank 19 to introduce the powder food product into the tank in an efficient way. The valve 200, which is connected to the powder inlet 38, is configured to control a vacuum induced flow of the powder food product into the tank 19 via the powder inlet 38.

A jacket 21 surrounds a periphery of the tank 19 and has an inlet respectively an outlet (not shown) for allowing a cooling or heating media to flow through the jacket 21 for decreasing or increasing a temperature of food product that are present inside the tank 19.

A double shaft agitator 20 is located inside the mixing unit 1 and has a double shaft axle 22, 23 that is suspended from the top of the tank 19. The double shaft axle has a first axle 22 that encloses an upper part of a second axle 23, and the two axles 22, 23 are driven to rotate in same or different directions R1, R2 by a motor unit 32 that is arranged at the top of the mixing unit 1. The two axles 22, 23 extend along and are rotatable about a first rotational axis A1 of the mixing unit 1.

A fist blade 24 is via an arm 25 connected to the first axle 22 so that the first blade 24 rotates in the same direction R1 as the first axle 22 when driven by the motor unit 32. The first blade 24 may be a scraper blade that rotates close to an inner wall of the tank 19, so that food product that stick to the inner tank wall may be scraped off.

A second blade 26 is via an arm 27 connected to the second axle 23 so that the second blade 26 rotates in the same direction R2 as the second axle 23 when driven by the motor unit 32. The second blade 26 may be a fluid lifting blade in the sense that it is arranged to make food product in contact with the second blade 26 flow upward from the bottom 29 of the tank 19 in a direction towards the top of the tank 19 when the second axle 23 is driven by the motor unit 32. Any suitable numbers of fluid lifting blades like the second blade 26 may be connected to the second axle 23, such as four blades, as shown in the illustrated example.

A rotor 51 is arranged at the bottom 29 of the tank 19. The rotor 51 is via an axle 54 connected to a rotor engine 53 that, when activated, drives the axle 54 so that the rotor 51 rotates in a rotational direction R3. The axle 54 of the rotor 51 extends along and is rotatable about a second rotational axis A2 of the mixing unit 1. The two axes A1 and A2 are preferably aligned with each other. A stator 52 is arranged around the radial periphery of the rotor 51. An actuator 56 is arranged to move the stator 52 in a direction D that is parallel to the axis of rotation A2 of the rotor 51. The actuator 56 can set the stator 52 in a lowermost position where it surrounds the radial periphery (circumference) of the rotor 51. The stator 52 can then, by the actuator 56, be moved to an uppermost position where it is lifted such that it does not surround the radial periphery of the rotor 51. The stator 52 has openings where it surrounds the circumference of the rotor 51, thereby allowing food product to be pushed through the stator when the stator 52 in an a position where it surrounds all of or some of the rotor 51.

The rotor 51, the stator 52 and the actuator 56 form a rotor-stator arrangement 50 that allows a shear that food product are subjected to, by the rotor 51 and the stator 52, to be varied when the rotor 51 rotates. In detail, when the stator 52 is in its lowermost position (closest to the bottom 29 of the tank 19), food product inside the tank 19 are by the rotation of the rotor 51 drawn towards the upper side of the rotor 51. The food product are then forced outwards in a radial direction of the rotor 51, through the holes in the stator 52 that surround the circumference of the rotor 51.

When the stator 52 is in its uppermost position (farthest away from the bottom 29 of the tank 19), food product inside the tank 19 are by the rotation of the rotor 51 drawn towards the upper side of the rotor 51. The food product are still forced outwards in a radial direction of the rotor 51, but without passing through the holes in the stator 52 since the stator 52 does not surround the circumference of the rotor 51. The stator 52 can be positioned at any location between its lowermost position and its uppermost position, which will vary the amount of food product that pass through the stator 52. The more food product that pass though the stator 52, the higher the shear will be. Thus, due to the actuator 56 and the movable stator 52 it is possible to vary a shear that is provided by the rotor 51 and the stator 52 during mixing of any ingredient inside the mixing unit 1.

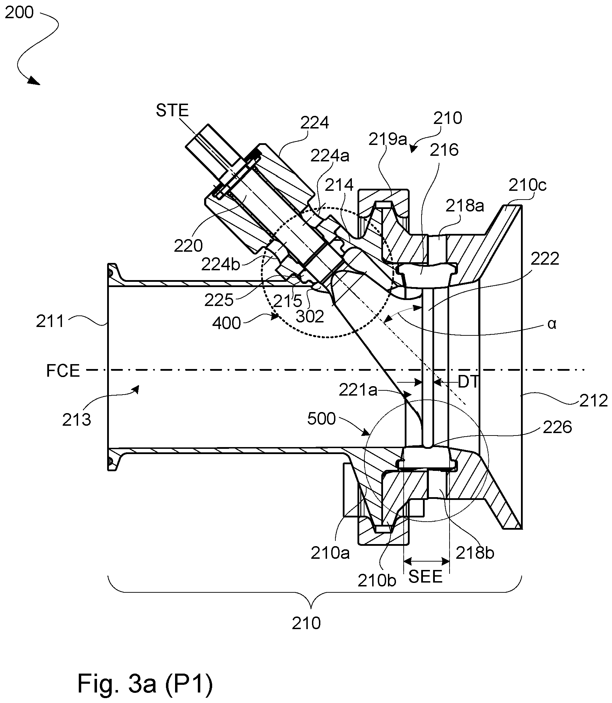

Fig. 2 illustrates an exploded view of the valve 200 as introduced in connection with Fig. 1. Figs 3a-b illustrates an assembled view of the valve 200.

With reference to Figs 2 and 3a-3b, the valve 200 comprises a valve body 210 having a product inlet 211, a product outlet 212, and a product flow channel 213 formed between the product inlet and outlet 211, 212. The product flow channel 213 has an flow channel extension FCE.

The valve body 210 is formed by a first part 210a, a second part 210b and a third part 210c. In Fig. 2, the parts 210a-c are separated from each other. In Figs 3a-b, the parts 210a-c are connected to each other by attachment devices 219a, 219b. The attachment devices 219a, 219b are formed by a clamp 219a and a bolt 219b, wherein the clamp 219a is for connecting the first and second parts 210a-b. In the depicted figure, one bolt 219b is illustrated but also four bolt holes. Thus, the second and third parts 210b, 210c may be connected via four bolts 219b according to the present figure. The bolts 219b may be entered through openings in the second part 210b and screwed into threaded holes 229 in the third part 210c to thereby attach the second and third parts 210b, 210c to each other. Other attaching devices suitable to connect the parts 210a, 210b, 210c of the valve body 210 may be used as well. It should be noted that the valve body 210 may be formed by more than three parts or by less than three parts as well. The third part 210c may form a part of the mixing unit 1 in Fig. 1, for example by being welded to the mixing unit 1.

The valve body 210 comprises a valve seat 226. The valve seat 226 comprises a main seal groove 217 in which a main sealing element 216 is arranged. The main seal groove 217 extends along the parts 210a, 210b, 210c of the valve body 210. In the depicted figure, the main sealing element 216 is provided with a protrusion in order to fasten the main sealing element 216.

The third part 210c of the valve body 210 comprises two opposite leakage detection passages 218a, 218b. The leakage detection passages 218a, 218b extend from the main seal groove 217 to an outer surface of the valve body 210. The leakage detection passages 218a, 218b are arranged for providing detection of leakage past the main sealing element 216 of the valve 200. Preferably the leakage detection passages 218a, 218b are provided in the boundary between the second part 210b and third part 210c of the valve body 210.

The valve 200 further comprises a rotatable steam 220. The stem 220 comprises an end portion 221a and a further end portion 221b. In Figs 3a-b, the stem 220 extends through a wall 214 of the first part 210a of the valve body 210 such that the end portion 221a of the stem is disposed within the product flow channel 213. The stem 220 is arranged with an angle β relative to the valve body 210.

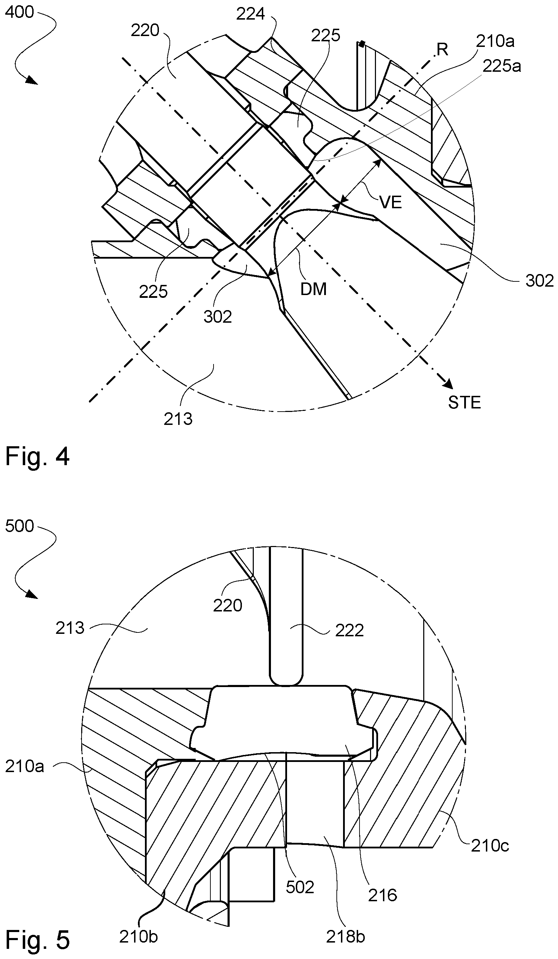

The valve body 210 further comprises a removable stem holder 224 which is configured to receive the other end portion 221b of the stem 220 in order to hold the stem 220 in place in relation to the valve body 210. The valve 200 further comprises a stem seal groove 215 in which a stem seal 225 is arranged. The stem seal groove 215 is located between the steam holder 224 and the valve body 210 and the stem seal 225 is configured to seal between the stem holder 224 and the valve body 210. The stem holder 224 comprises a leakage detecting hole 224a, 224b. The leakage detection hole 224a, 224b extends through the stem holder 224, in the radial direction R (see Fig. 4). The leakage detecting hole 224a, 224b is arranged for providing detection of leakage past the stem seal 225. The stem 220 has an elongated extension STE.

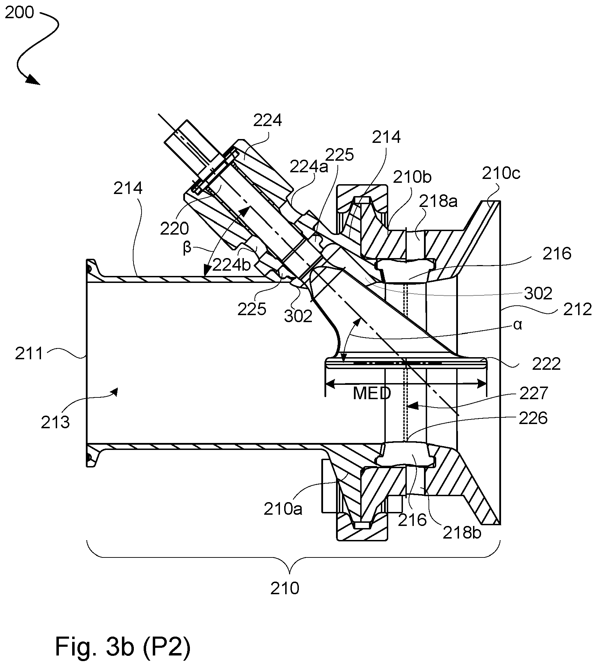

The valve 220 further comprises a disk 222 which is arranged at the end portion 221a of the stem 220. As best illustrated in Figs 3a-b, the disk 222 is arranged at the end portions 221a of the stem 220 at an angle α which is greater than zero in relation to the elongated extension STE of the stem 220. The disk 222 is movable from a closed position P1, as illustrated in Fig. 3a, to an open position P2, as illustrated in Fig. 3b. The disk 222 is moved by rotating the stem 220 approximately 180°. The stem 220 may be rotated in different ways, such as 160-200°, preferably 170-190°, more preferably 175-185°, even more preferably 179-180°.

The stem 200 may be the only structure that holds the disk 222. This may mean that there is, in the valve body 210, only one through hole or opening that is used for the purpose of providing support for the disk 222.

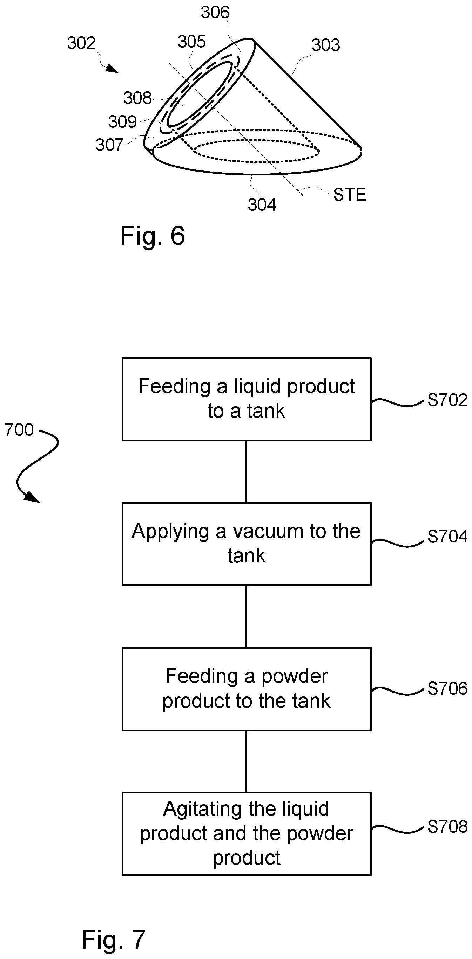

As further illustrated in Figs 3a-b, the valve body 210 further comprises a void space 302. The void space 302 surrounds the stem 220 and extend from the stem seal 225 to the product flow channel 213. Thereby, the product flow channel 213 is in direct contact with the stem seal 215. Put differently, the stem seal 215 is fluidly connected to the product flow channel 213 via the void space 302. The void space 302 is further illustrated and discussed in connection with Figs 4 and 6.

The disk 222 is arranged in the closed position P1 in which the disk 222 abuts the valve seat 226. In this position, the product flow channel 213 is blocked by the disk 222 in order to prevent product to flow through the valve 200. When the disk 222 is arranged in the closed position P1 and abuts the valve seat 226, it is arranged to seal the valve closure area 2227 such that the valve 200 is tight between the disk 222 and the valve body 210.

The disk 222 has a thickness DT as seen along the product flow channel 213, when the disk 222 is in the closed position P1. The main sealing element 216 has an extension SEE along the product flow channel 213. Preferably, the main sealing element 216 has an extension which is at least three times the thickness of the disk 222.

With reference to Fig. 3b, further to what have been discussed above, the disk 222 of the valve 200 is arranged in the open position P2. As illustrated, when the disk 222 is in the open position P2, a main extension MED of the disk 222 is arranged in parallel to the product flow channel 213. In other words, a main extension MED of the disk 222 is arranged in parallel to a principal product flow at a location of the disk 222.

As further illustrated in Fig. 3b, the valve seat 226 has a seating area. In this context, the valve seat 226 is arranged to define a valve closure area 227 having the same angle α relative to the elongated extension STE as the valve disk 222. The angles α and β may be equal, which is the preferred design. This is true in the case when angles α, β are 45°. In other cases, the angles α, β may be different degrees but should together preferably be 90°.

In Fig. 4, showing section 400 of Fig. 3a, the void space 302 as introduced in Fig. 3a is illustrated in further detail by way of examples. The void space 302 surrounds the stem 220. The void space 302 extends from the stem seal 225 to the product flow channel 213 such that the stem seal 225 is fluidly connected to the product flow channel 213 via the void space 302. The void space 302 facilitates cleaning of the valve 200, wherein cleaning fluid is able to be flushed to the stem seal 225 thereby being in directed contact with the stem seal 225. This provides for an improved cleanability compared to conventional valves.

The void space 302 has an extension VE of at least 3 mm in a radial direction R of the stem 220. The void space 302 may have other extensions, such as at least 7.5 mm.

The void space 302 has, in a radial direction R of the stem 220, an extension VE that has a length that is at least 20% of a thickness DM of the stem 220, where the thickness DM of the stem 220 is measured across the stem 220 in the radial direction R. The extension VE and the thickness DM may be measured at the same longitudinal position on the stem 220, as seen in a direction along the elongated extension STE. The extension VE is measured on a side of the stem 220 that is opposite the product flow channel 213. The void space 302 may have, in the radial direction R of the stem 220, an extension VE that has a length that is even longer, such as at least 30% or even at least 40% of the thickness DM of the stem 220. Having an extension VE that is at least 20% of the thickness DM is advantageous in that a peripheral part 225a of the stem seal 215 may be more efficiently cleaned.

As best illustrated in Fig. 6, the void space 302 has a shape of a hollow body 303 with a truncated section 304, at a first end thereof, and a base section 305, at a second opposite end thereof. A first portion 306 of the base section 305 extends into the wall 214. A second portion 307 of the base section 305, which is opposite the first portion 306, is adjacent the product flow channel 213 and thereby being in direct contact with the product flow channel 213. The stem 220 is configured to be introduced through the void space 302. In other words, the void space 302 has the shape of a truncated, hollow cylinder, where the rotatable stem 220 extends through a hollow section 308 of the void space 302.

When the stem 220 is introduced through the wall 214 of the valve body 210 and the stem holder is arranged to hold the stem 220 in the desired way, in relation to the valve body 210, the peripheral part 225a, seen along an axial direction STE, of the stem seal 215 faces the base section 305 partially defining the void space 302. Once the peripheral part 225a of the stem seal 215 faces the base section 305, the stem seal 215 is defining a ring-shaped area 309 partially defining the void space 302 at which the sealing between the stem holder 224 and the valve body 210 is provided. Thereby, the stem seal 225 is fluidly connected with the product flow channel 213.

As mentioned, the void space 302 should be understood as a geometrical shape that defines its surrounding, i.e. it is a technical design parameter that gives the valve certain technical characteristics. The void space 302 is therefore created to let its geometrical shape define the shape of the parts of the valve that surround the void space. It can therefore be said the shape of the various valve parts define the shape of the void space 302. More particularly, the shapes of the housing 210, the stem 220, the stem seal 225 and the product flow channel 213 define the shape of the void space 220 (or vice versa).

With reference to Fig. 5, showing section 500 of Fig. 3a, the main sealing element 216 and the disk 222, when in the closed position P1, is illustrated in further detail. Herein, the disk 222 abuts the main sealing element 216 thereby providing the sealing such that no product may pass the disk 222. There is a gap 502 formed between the main sealing element 216 and the main sealing groove 217, thereby the main sealing element 216 may be able to be pressed towards the main sealing groove 217 once the disk 222 abuts the main sealing element 216. This is advantageous in that a reduced wear and tear is provided on the main sealing element 216 compared to conventional valves. Thereby, an increased gasket replacement interval is facilitated. The leakage passage 218b as discussed above is also illustrated in further detail.

Fig. 7 is a flowchart illustrating a method 700 for mixing a liquid food product with a powder food product. The method 700 comprises a first step S702 in which the liquid food product is fed to the tank 19 of the mixing unit 1 as discussed in connection with Fig. 1. The liquid food product has a liquid surface LS inside the tank 19. Thereafter, in a second step S704, a vacuum is applied to the tank 19 by using the vacuum source 70 of the mixing unit 1. In a third step S706, powder food product is feed to the tank of the mixing unit 1 via the valve 200 as discussed above. It should be noted that the liquid surface LS is preferably above the powder inlet 38 such that the powder food product is fed to the tank 19 below the liquid surface LS. In a fourth step S708, the liquid food product is agitated with the powder food product by using the agitator 20 of the mixer.

Even though illustrated and described in a certain order, other orders may also be used.

From the description above follows that, although various embodiments of the invention have been described and shown, the invention is not restricted thereto, but may also be embodied in other ways within the scope of the subject-matter defined in the following claims.

## Claims

1. A valve (200) for controlling a product flow, the valve (200) comprising
a valve body (210) having a product inlet (211), a product outlet (212), a product flow channel (213) formed between the product inlet (211) and the product outlet (212), and a valve seat (226) arranged in the product flow channel (213),
a rotatable stem (220) extending through a wall (214) of the valve body (210) and into the product flow channel (213) with an end portion (221a) of the stem (220) disposed within the product flow channel (213),
a disk (222) arranged at the end portion (221a) of the stem (220) at an angle (α) greater than zero relative to an elongated extension (STE) of the stem (220), the disk (222) being movable from a closed position (P1) where it abuts the valve seat (226) for sealing the product flow channel (213), to an open position (P2) by rotating the stem (220) approximately 180°,
wherein the valve body (210) comprises a stem seal groove (215) having a stem seal (225) that surrounds the stem (220) for providing sealing between the valve body (210) and the stem (220),
a void space (302) surrounding the stem (220) and extending from the stem seal (225) to the product flow channel (213), such that the stem seal (225) is fluidly connected to the product flow channel (213) via the void space (302),
**characterized in that** the void space (302) has, in a radial direction (R) of the stem (220), an extension (VE) that has a length that is at least 20% of a thickness (DM) of the stem (220), where the thickness (DM) of the stem (220) is measured across the stem (220) in the radial direction (R), the extension (VE) being be measured on a side of the stem (220) that is opposite the product flow channel (213).

2. The valve (200) according to claim 1, wherein the void space (302) has an extension (VE) of at least 3 mm in a radial direction (R) of the stem (220).

3. The valve (200) according to claim 1 or 2, wherein the void space (302) has a shape of a hollow body (303) with a truncated section (304) at a first end thereof and a base section (305) at a second opposite end thereof, where a first portion (306) of the base section (305) extends into the wall (214) of the valve body (210), and wherein a second portion (307) of the base section (305) is adjacent the product flow channel (213).

4. The valve (200) according to claim 3, wherein the second portion (307) of the base section (305) is opposite to the first portion (306) of the base section (305) and wherein the second portion (307) is in direct contact with the product flow channel (213).

5. The valve (200) according to claim 3 or 4, wherein a peripheral part (225a) of the stem seal (225) faces the base section (305) of the void space (302), to thereby define a ring-shaped area (309) partially defining the void space (302).

6. The valve (200) according to any one of the preceding claims, wherein the void space (302) has the shape of a truncated, hollow cylinder, where the rotatable stem (220) extends through the void space (302).

7. The valve (200) according to any one of the preceding claims, wherein the valve body (210) comprises a removable stem holder (224) radially surrounding a portion of the stem (220) and being configured to hold the stem (220) in relation to the valve body (210), wherein the stem seal groove (215) is located between the stem holder (224) and the valve body (220).

8. The valve (200) according to claim 7, wherein the stem holder (224) comprises a leakage detecting hole (224a, 224b) that extends through the stem holder (224), in the radial direction (R), for providing detection of leakage past the stem seal (225).

9. The valve (200) according to any one of the preceding claims, wherein the valve seat (226) comprises a main seal groove (217) in which a main sealing element (216) is arranged.

10. The valve (200) according to claim 9, wherein the valve body (210) comprises two opposite leakage detection passages (218a, 218b) that extend from the main seal groove (217), to an outer surface of the valve body (210) for providing detection of leakage past the main sealing element (216).

11. The valve (200) according to claim 9 or 10, wherein the valve body (210) comprises a first part (210a), a second part (210b) and a third part (210c) that are connected to each other by attachment devices (219a, 219b) and with the second part (210b) arranged between the first part (210a) and the third part (210c), the main seal groove (217) being formed between the first part (210a), the second part (210b) and the third part (210c).

12. The valve (200) according to claim 10 and 11, wherein the leakage detection passages (218a, 218b) are formed in the third part (210c).

13. The valve (200) according to any one of claims 9 to 12, wherein the main sealing element (216) has an extension (SEE) seen along the product flow channel (213) which is at least three times a thickness (DT) of the disc (222).

14. A mixing unit (1) for mixing a liquid product with a powder product, the mixing unit comprising
a tank (19) comprising a liquid inlet (28) configured to receive the liquid product to the tank (19) and an powder inlet (38) configured to receive the powder product to the tank (19),
a vacuum source (70) connected to the tank (19) and configured to apply a vacuum to the tank (19),
a valve (200) connected to the powder inlet (38) and configured to control a vacuum induced flow of the powder product into the tank (19) via the powder inlet (38), and
an agitator (20) arranged inside the tank (19) and configured to agitate the liquid product and the powder product, wherein
the valve (200) is a valve according to any one of the preceding claims.

15. A method (700) for mixing a liquid food product with a powder food product, the method (700) comprising:
feeding (S702) the liquid food product to the tank (19) of a mixing unit (1), the liquid food product having a liquid surface (LS) inside the tank (19);
applying (S704) a vacuum to the tank (19) by using a vacuum source (70);
feeding (S706) the food powder product to the tank (19) of the mixing unit (1) via a valve (200) of the mixing unit (1), when the liquid surface (LS) is above the powder inlet (38) such that the powder product is fed to the tank (19) below the liquid surface (LS); and
agitating (S708) the liquid product with the powder product by using the agitator (20), wherein
the mixing unit (1) is a mixing unit according to claim 14.

## Patentansprüche

1. Ventil (200) zur Steuerung eines Produktstroms, wobei das Ventil (200) Folgendes umfasst:
einen Ventilkörper (210) mit einem Produkteinlass (211), einem Produktauslass (212), einem zwischen dem Produkteinlass (211) und dem Produktauslass (212) ausgebildeten Produktstromkanal (213) und einem in dem Produktstromkanal (213) angeordneten Ventilsitz (226),
einen drehbaren Schaft (220), der sich durch eine Wand (214) des Ventilkörpers (210) und in den Produktstromkanal (213) erstreckt, wobei ein Endabschnitt (221a) des Schafts (220) innerhalb des Produktstromkanals (213) angeordnet ist,
eine Scheibe (222), die an dem Endabschnitt (221a) des Schafts (220) in einem Winkel (α) größer als null in Bezug auf eine Längserstreckung (STE) des Schafts (220) angeordnet ist, wobei die Scheibe (222) durch Drehen des Schafts (220) um etwa 180° aus einer geschlossenen Stellung (P1), in der diese an dem Ventilsitz (226) anliegt, um den Produktstromkanal (213) abzudichten, in eine geöffnete Stellung (P2) bewegbar ist,
wobei der Ventilkörper (210) eine Schaftdichtungsnut (215) mit einer Schaftdichtung (225) umfasst, die den Schaft (220) umgibt, um eine Abdichtung zwischen dem Ventilkörper (210) und dem Schaft (220) bereitzustellen, einen Hohlraum (302), der den Schaft (220) umgibt und sich von der Schaftdichtung (225) zu dem Produktstromkanal (213) erstreckt, sodass die Schaftdichtung (225) über den Hohlraum (302) mit dem Produktstromkanal (213) in Fluidverbindung steht, **dadurch gekennzeichnet, dass** der Hohlraum (302) in einer radialen Richtung (R) des Schafts (220) eine Erstreckung (VE) aufweist, die eine Länge hat, die mindestens 20 % einer Dicke (DM) des Schafts (220) beträgt, wobei die Dicke (DM) des Schafts (220) über den Schaft (220) in radialer Richtung (R) gemessen wird, wobei die Erstreckung (VE) auf einer Seite des Schafts (220) gemessen wird, die dem Produktstromkanal (213) gegenüberliegt.

2. Ventil (200) nach Anspruch 1, wobei der Hohlraum (302) eine Erstreckung (VE) von mindestens 3 mm in einer radialen Richtung (R) des Schafts (220) aufweist.

3. Ventil (200) nach Anspruch 1 oder 2, wobei der Hohlraum (302) die Form eines Hohlkörpers (303) mit einem abgeschnittenen Abschnitt (304) an einem ersten Ende davon und einem Basisabschnitt (305) an einem zweiten, gegenüberliegenden Ende davon aufweist, wobei sich ein erster Teil (306) des Basisabschnitts (305) in die Wand (214) des Ventilkörpers (210) erstreckt und wobei ein zweiter Teil (307) des Basisabschnitts (305) an den Produktstromkanal (213) angrenzt.

4. Ventil (200) nach Anspruch 3, wobei der zweite Teil (307) des Basisabschnitts (305) dem ersten Teil (306) des Basisabschnitts (305) gegenüberliegt und wobei der zweite Teil (307) in direktem Kontakt mit dem Produktstromkanal (213) steht.

5. Ventil (200) nach Anspruch 3 oder 4, wobei ein umlaufender Teil (225a) der Schaftdichtung (225) dem Basisabschnitt (305) des Hohlraums (302) zugewandt ist, um dadurch einen ringförmigen Bereich (309) zu definieren, der teilweise den Hohlraum (302) definiert.

6. Ventil (200) nach einem der vorhergehenden Ansprüche, wobei der Hohlraum (302) die Form eines abgeschnittenen Hohlzylinders aufweist, wobei sich der drehbare Schaft (220) durch den Hohlraum (302) erstreckt.

7. Ventil (200) nach einem der vorhergehenden Ansprüche, wobei der Ventilkörper (210) einen abnehmbaren Schafthalter (224) umfasst, der einen Teil des Schafts (220) radial umgibt und dazu ausgelegt ist, den Schaft (220) in Bezug auf den Ventilkörper (210) zu halten, wobei sich die Schaftdichtungsnut (215) zwischen dem Schafthalter (224) und dem Ventilkörper (220) befindet.

8. Ventil (200) nach Anspruch 7, wobei der Schafthalter (224) ein Leckageerkennungsloch (224a, 224b) umfasst, das sich durch den Schafthalter (224) in radialer Richtung (R) erstreckt, um eine Erkennung von Leckage an der Schaftdichtung (225) vorbei zu ermöglichen.

9. Ventil (200) nach einem der vorhergehenden Ansprüche, wobei der Ventilsitz (226) eine Hauptdichtungsnut (217) umfasst, in der ein Hauptdichtungselement (216) angeordnet ist.

10. Ventil (200) nach Anspruch 9, wobei der Ventilkörper (210) zwei gegenüberliegende Leckageerkennungsdurchgänge (218a, 218b) umfasst, die sich von der Hauptdichtungsnut (217) zu einer Außenfläche des Ventilkörpers (210) erstrecken, um eine Erkennung von Leckage am Hauptdichtungselement (216) vorbei zu ermöglichen.

11. Ventil (200) nach Anspruch 9 oder 10, wobei der Ventilkörper (210) einen ersten Teil (210a), einen zweiten Teil (210b) und einen dritten Teil (210c) umfasst, die durch Befestigungsvorrichtungen (219a, 219b) miteinander verbunden sind, wobei der zweite Teil (210b) zwischen dem ersten Teil (210a) und dem dritten Teil (210c) angeordnet ist, wobei die Hauptdichtungsnut (217) zwischen dem ersten Teil (210a), dem zweiten Teil (210b) und dem dritten Teil (210c) ausgebildet ist.

12. Ventil (200) nach Anspruch 10 und 11, wobei die Leckageerkennungsdurchgänge (218a, 218b) im dritten Teil (210c) ausgebildet sind.

13. Ventil (200) nach einem der Ansprüche 9 bis 12, wobei das Hauptdichtungselement (216) eine Erstreckung (SEE) entlang des Produktstromkanals (213) aufweist, die mindestens dreimal so groß wie eine Dicke (DT) der Scheibe (222) ist.

14. Mischeinheit (1) zum Mischen eines flüssigen Produkts mit einem pulverförmigen Produkt, wobei die Mischeinheit Folgendes umfasst:
einen Behälter (19) mit einem Flüssigkeitseinlass (28), der dazu ausgelegt ist, das flüssige Produkt in den Behälter (19) aufzunehmen, und einem Pulvereinlass (38), der dazu ausgelegt ist, das pulverförmige Produkt in den Behälter (19) aufzunehmen,
eine Vakuumquelle (70), die mit dem Behälter (19) verbunden und dazu ausgelegt ist, ein Vakuum in dem Behälter (19) zu erzeugen,
ein Ventil (200), das mit dem Pulvereinlass (38) verbunden und dazu ausgelegt ist, über den Pulvereinlass (38) einen vakuuminduzierten Strom des pulverförmigen Produkts in den Behälter (19) zu steuern, und
einen Rührer (20), der im Inneren des Behälters (19) angeordnet und dazu ausgelegt ist, das flüssige Produkt und das pulverförmige Produkt zu rühren, wobei
das Ventil (200) ein Ventil nach einem der vorhergehenden Ansprüche ist.

15. Verfahren (700) zum Mischen eines flüssigen Lebensmittelprodukts mit einem pulverförmigen Lebensmittelprodukt, wobei das Verfahren (700) Folgendes umfasst:
Zuführen (S702) des flüssigen Lebensmittelprodukts in den Behälter (19) einer Mischeinheit (1), wobei das flüssige Lebensmittelprodukt einen Flüssigkeitsspiegel (LS) im Inneren des Behälters (19) aufweist;
Erzeugen (S704) eines Vakuums in dem Behälter (19) unter Verwendung einer Vakuumquelle (70);
Zuführen (S706) des pulverförmigen Lebensmittelprodukts in den Behälter (19) der Mischeinheit (1) über ein Ventil (200) der Mischeinheit (1), wenn der Flüssigkeitsspiegel (LS) über dem Pulvereinlass (38) liegt, sodass das pulverförmige Produkt unterhalb des Flüssigkeitsspiegels (LS) in den Behälter (19) zugeführt wird; und
Rühren (S708) des flüssigen Produkts mit dem pulverförmigen Produkt unter Verwendung des Rührers (20), wobei
die Mischeinheit (1) eine Mischeinheit nach Anspruch 14 ist.

## Revendications

1. Soupape (200) destinée à réguler un écoulement de produit, la soupape (200) comprenant
un corps de soupape (210) comportant une entrée de produit (211), une sortie de produit (212), un canal d'écoulement de produit (213) formé entre l'entrée de produit (211) et la sortie de produit (212), et un siège de soupape (226) disposé dans le canal d'écoulement de produit (213),
une tige rotative (220) s'étendant à travers une paroi (214) du corps de soupape (210) et dans le canal d'écoulement de produit (213), une partie d'extrémité (221a) de la tige (220) étant disposée à l'intérieur du canal d'écoulement de produit (213),
un disque (222) disposé au niveau de la partie d'extrémité (221a) de la tige (220) à un angle (α) supérieur à zéro par rapport à une extension allongée (STE) de la tige (220), le disque (222) étant mobile d'une position fermée (P1) où il vient en butée contre le siège de soupape (226) pour fermer le canal d'écoulement de produit (213), à une position ouverte (P2) en faisant tourner la tige (220) d'environ 180°,
le corps de soupape (210) comprenant une rainure de joint de tige (215) ayant un joint de tige (225) qui entoure la tige (220) pour assurer l'étanchéité entre le corps de soupape (210) et la tige (220),
un espace vide (302) entourant la tige (220) et s'étendant du joint de tige (225) au canal d'écoulement de produit (213), de sorte que le joint de tige (225) soit en communication fluidique avec le canal d'écoulement de produit (213) par l'intermédiaire de l'espace vide (302), **caractérisée en ce que** l'espace vide (302) présente, dans une direction radiale (R) de la tige (220), une extension (VE) dont la longueur est au moins égale à 20 % de l'épaisseur (DM) de la tige (220), l'épaisseur (DM) de la tige (220) étant mesurée à travers la tige (220) dans la direction radiale (R), l'extension (VE) étant mesurée sur un côté de la tige (220) qui est opposé au canal d'écoulement de produit (213).

2. Soupape (200) selon la revendication 1, l'espace vide (302) ayant une extension (VE) d'au moins 3 mm dans une direction radiale (R) de la tige (220).

3. Soupape (200) selon la revendication 1 ou 2, l'espace vide (302) ayant la forme d'un corps creux (303) avec une section tronquée (304) au niveau d'une première extrémité de celui-ci et une section de base (305) au niveau d'une seconde extrémité opposée de celui-ci, où une première partie (306) de la section de base (305) s'étend dans la paroi (214) du corps de soupape (210), et une seconde partie (307) de la section de base (305) étant adjacente au canal d'écoulement de produit (213).

4. Soupape (200) selon la revendication 3, la seconde partie (307) de la section de base (305) étant opposée à la première partie (306) de la section de base (305) et la seconde partie (307) étant en contact direct avec le canal d'écoulement de produit (213).

5. Soupape (200) selon la revendication 3 ou 4, une partie périphérique (225a) du joint de tige (225) faisant face à la section de base (305) de l'espace vide (302), pour définir ainsi une zone en forme d'anneau (309) définissant partiellement l'espace vide (302).

6. Soupape (200) selon l'une quelconque des revendications précédentes, l'espace vide (302) ayant la forme d'un cylindre creux tronqué, où la tige rotative (220) s'étend à travers l'espace vide (302).

7. Soupape (200) selon l'une quelconque des revendications précédentes, le corps de soupape (210) comprenant un support de tige amovible (224) entourant radialement une partie de la tige (220) et conçu pour maintenir la tige (220) par rapport au corps de soupape (210), la rainure de joint de tige (215) étant située entre le support de tige (224) et le corps de soupape (220).

8. Soupape (200) selon la revendication 7, le support de tige (224) comprenant un trou de détection de fuite (224a, 224b) qui s'étend à travers le support de tige (224), dans la direction radiale (R), pour permettre la détection d'une fuite au-delà du joint de tige (225).

9. Soupape (200) selon l'une quelconque des revendications précédentes, le siège de soupape (226) comprenant une rainure d'étanchéité principale (217) dans laquelle un élément d'étanchéité principal (216) est disposé.

10. Soupape (200) selon la revendication 9, le corps de soupape (210) comprenant deux passages de détection de fuite (218a, 218b) opposés qui s'étendent de la rainure d'étanchéité principale (217) à une surface extérieure du corps de soupape (210) pour permettre la détection de fuites au-delà de l'élément d'étanchéité principal (216).

11. Soupape (200) selon la revendication 9 ou 10, le corps de soupape (210) comprenant une première partie (210a), une deuxième partie (210b) et une troisième partie (210c) qui sont reliées entre elles par des dispositifs de fixation (219a, 219b) et la deuxième partie (210b) étant disposée entre la première partie (210a) et la troisième partie (210c), la rainure d'étanchéité principale (217) étant formée entre la première partie (210a), la deuxième partie (210b) et la troisième partie (210c).

12. Soupape (200) selon les revendications 10 et 11, les passages de détection de fuite (218a, 218b) étant formés dans la troisième partie (210c).

13. Soupape (200) selon l'une quelconque des revendications 9 à 12, l'élément d'étanchéité principal (216) ayant une extension (SEE) vue le long du canal d'écoulement de produit (213) qui est au moins trois fois l'épaisseur (DT) du disque (222).

14. Unité de mélange (1) pour mélanger un produit liquide avec un produit en poudre, l'unité de mélange comprenant
un réservoir (19) comprenant une entrée de liquide (28) conçue pour recevoir le produit liquide dans le réservoir (19) et une entrée de poudre (38) conçue pour recevoir le produit en poudre dans le réservoir (19),
une source de vide (70) reliée au réservoir (19) et conçue pour appliquer un vide au réservoir (19),
une soupape (200) reliée à l'entrée de poudre (38) et conçue pour réguler un écoulement induit par le vide du produit en poudre dans le réservoir (19) par l'intermédiaire de l'entrée de poudre (38), et
un agitateur (20) disposé à l'intérieur du réservoir (19) et conçu pour agiter le produit liquide et le produit en poudre,
la soupape (200) étant une soupape selon l'une quelconque des revendications précédentes.

15. Procédé (700) pour mélanger un produit alimentaire liquide avec un produit alimentaire en poudre, le procédé (700) comprenant les étapes consistant à :
introduire (S702) le produit alimentaire liquide dans la cuve (19) d'une unité de mélange (1), le produit alimentaire liquide ayant une surface de liquide (LS) à l'intérieur de la cuve (19) ;
appliquer (S704) un vide au réservoir (19) à l'aide d'une source de vide (70) ;
introduire (S706) le produit alimentaire en poudre dans le réservoir (19) de l'unité de mélange (1) par l'intermédiaire d'une soupape (200) de l'unité de mélange (1), lorsque la surface de liquide (LS) est au-dessus de l'entrée de poudre (38) de sorte que le produit en poudre soit introduit dans le réservoir (19) au-dessous de la surface de liquide (LS) ; et
agiter (S708) le produit liquide avec le produit en poudre à l'aide de l'agitateur (20),
l'unité de mélange (1) étant une unité de mélange selon la revendication 14.
